# EUROPÄISCHE PATENTSCHRIFT

(11) **EP 0 511 533 B1**
(45) Veröffentlichungstag und Bekanntmachung des Hinweises auf die Patenterteilung: **24.01.1996**
(21) Anmeldenummer: 92106199.0
(22) Anmeldetag: 10.04.1992
(51) Int. Cl.: B60H 1/32

(54) **Klimaanlage für ein Kraftfahrzeug**
Air-conditioning unit for a motor vehicle
Climatisation pour un véhicule à moteur

(30) Priorität: 27.04.1991 DE 4113846
(43) Veröffentlichungstag der Anmeldung: 04.11.1992
(73) Patentinhaber: Adam Opel Aktiengesellschaft, D-65428 Rüsselsheim (DE)
(72) Erfinder: Springer, Peter, Dipl.-Ing. (FH), W-6095 Gustavsburg (DE); Schwenk, Wolfgang, Dipl.-Ing. (FH), W-6257 Hünfelden 5 (DE); Detampel, Heinz, W-6090 Rüsselsheim (DE)
(74) Vertreter: Bergerin, Ralf, Dipl.-Ing.

(56) Entgegenhaltungen:
- DE-A- 3 836 989
- FR-A- 2 280 039
- GB-A- 2 237 372
- US-A- 3 059 449
- PATENT ABSTRACTS OF JAPAN vol. 11, no. 372 (M-648)(2819) 4. Dezember 1987 & JP-A-62 146 713 (NISSAN MOTOR CO LTD) 30. Juni 1987

## Beschreibung

Die Erfindung betrifft eine Klimaanlage für ein Kraftfahrzeug mit einem Verdampfer, welcher in einem von der Außenluft durchströmten, in das Innere des Kraftfahrzeugs führenden Luftkanal angeordnet ist und durch den mittels eines Kompressors ein Kältemittel gefördert wird und welche eine einen Temperaturfühler aufweisende Steuerung zum Verhindern eines Vereisens des Verdampfers bei niedrigen Außentemperaturen aufweist.

Klimaanlagen der vorstehenden Art sind in heutigen Kraftfahrzeugen vorhanden und deshalb allgemein bekannt. Als Beispiel für den Stand der Technik sei auf die DE-A-31 43 588 verwiesen. Wird eine Klimaanlage bei niedrigen Außentemperaturen betrieben, dann kann es sehr leicht zu einem Zufrieren der Verdampferrippen kommen. Deshalb wird, was in der genannten Schrift nachzulesen ist, üblicherweise bei niedrigen, zu einer Vereisungsgefahr führenden Temperaturen der Verdampfer abgeschaltet, was meist nicht als nachteilig empfunden wird, weil die kühlende Wirkung einer Klimaanlage nur bei sommerlicher Witterung notwendig erscheint.

Der Betrieb einer Klimaanlage hat jedoch auch bei niedrigen Temperaturen Vorteile, beispielsweise bei naßkaltem Wetter, weil dann mittels des Verdampfers der in das Innere des Kraftfahrzeugs strömenden Luft Feuchtigkeit entzogen werden kann. Außerdem werden auch zusätzlich, aufgrund der feuchten Oberfläche des Verdampfers, Staub und Pollen mit herausgewaschen.

Der Erfindung liegt das Problem zugrunde, eine Klimaanlage der eingangs genannten Art so auszubilden, daß sie auch bei niedrigen Temperaturen ohne Vereisungsgefahr betrieben werden kann.

Dieses Problem wird erfindungsgemäß dadurch gelöst, daß der Verdampfer eine Heizung zum Verhindern einer zu niedrigen, zu einer Vereisung führenden Verdampfertemperatur aufweist und die Steuerung zum Einschalten der Heizung bei zu niedrigen, eine Vereisungsgefahr herbeiführenden Temperaturen ausgebildet ist.

Durch diese sehr einfache Ergänzung einer üblichen Klimaanlage kann diese auch bei niedrigen Temperaturen ohne Gefahr einer Vereisung ihres Verdampfers genutzt werden, beispielsweise um entfeuchtete oder gefilterte Luft in den Fahrzeuginnenraum einzuleiten. Da bei der erfindungsgemäßen Klimaanlage der Kompressor zur Vermeidung eines Vereisens des Verdampfers nicht zeitweilig ausgeschaltet werden muß, werden die hiermit verbundenen Vibrationen im Fahrzeug vermieden.

Die Heizung kann sehr unterschiedlich ausgebildet sein. Besonders einfach ist sie gestaltet, wenn sie durch einen Warmluftrückführkanal gebildet ist, welcher von der Auslaßseite eines zum Aufheizen der in das Kraftfahrzeug geleiteten Frischluft bestimmten Wärmetauschers bis vor den Verdampfer führt und ein von dem Temperaturfühler gesteuertes Absperrorgan hat.

Ein nachträgliches Umrüsten üblicher Klimaanlagen ist mit geringem Aufwand möglich, wenn die Heizung durch einen elektrischen Heizdraht im Luftkanal strömungsmäßig vor dem Verdampfer gebildet ist.

Ganz besonders gering ist der Aufwand für das Beheizen des Verdampfers, wenn die Heizung durch entlang des Verdampfers zum Wärmetauscher der Fahrzeugheizung führende Leitungen gebildet ist. Für eine solche Klimaanlage muß die Temperatur der in das Fahrzeuginnere einströmenden Luft natürlich durch Verändern des Anteils des über den Wärmetauscher geführten Luftstromes im Verhältnis zu einem ihn umgehenden Luftstrom und nicht durch den Wasserstrom zum Wärmetauscher geregelt werden, damit in den Leitungen des Wärmetauschers stets heißes Wasser fließt.

Die Klimaanlage kann ohne Beheizen des Verdampfers noch bei Temperaturen betrieben werden, die unmittelbar vor einer Vereisungsgefahr liegen, wenn der Temperaturfühler zum Messen der Temperatur der Außenwand des Verdampfers angeordnet ist.

Die Erfindung läßt zahlreiche Ausführungsformen zu. Zur weiteren Verdeutlichung ihres Grundprinzips sind drei davon schematisch in der Zeichnung dargestellt und werden nachfolgend beschrieben. In ihr zeigen die
- Fig.1: eine Seitenansicht einer erfindungsgemäßen Klimaanlage,
- Fig.2: eine Seitenansicht einer zweiten Ausführungsform einer Klimaanlage nach der Erfindung,
- Fig.3: eine Seitenansicht einer dritten Ausführungsform einer Klimaanlage nach der Erfindung.

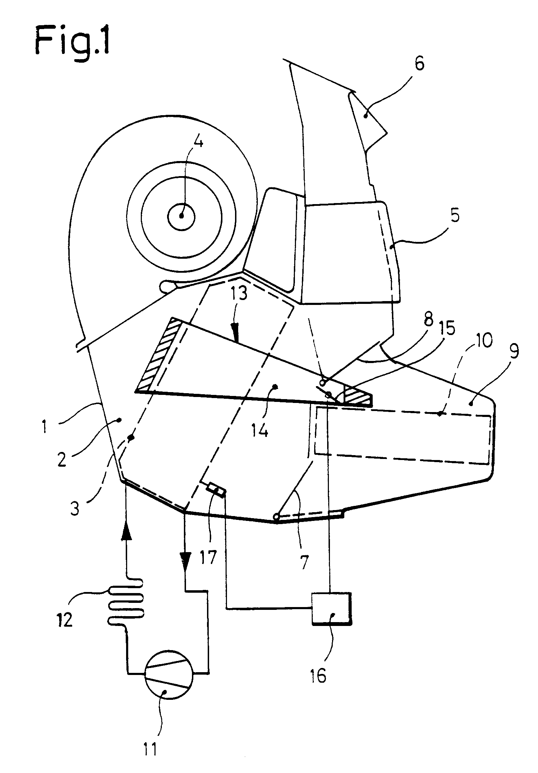

Die in Figur 1 gezeigte Klimaanlage hat in einem Gehäuse 1 einen Luftkanal 2, in welchem ein Verdampfer 3 angeordnet ist. Ein Gebläse 4 vermag Außenluft durch diesen Luftkanal 2 zu in das Innere eines Kraftfahrzeuges führenden Luftauslässen 5, 6 zu fördern. Je nach Stellung von Luftklappen 7, 8 gelangt die Luft nach dem Durchströmen des Verdampfers 3 entweder unmittelbar zu den Luftauslässen 5, 6 oder erst nach Durchströmen eines Heizkanals 9, in welchem ein von der Kühlflüssigkeit der Brennkraftmaschine betriebener Wärmetauscher 10 angeordnet ist.

Dem Verdampfer 3 ist ein Kompressor 11 zugeordnet, welcher das Kältemedium des Verdampfers 3 ansaugt und ihn über einen Verflüssiger 12 zurückführt. Sinkt die Temperatur der angesaugten Luft bis nahe 0°C ab, dann besteht bei einer üblichen Klimaanlage die Gefahr einer Vereisung des Verdampfers 3, der man üblicherweise dadurch begegnet, daß man beispielsweise bei 3°C den Kompressor 11 abschaltet. Gemäß der Erfindung läßt man jedoch den Kompressor 11 ständig weiterlaufen und schaltet bei Vereisungsgefahr eine Heizung 13 an, durch welche der Verdampfer 3 erwärmt wird. Bei der Ausführungsform nach Figur 1 besteht diese Heizung 13 aus einem Warmluftrückführkanal 14, über den nach Öffnen einer Klappe 15 vom Wärmetauscher 10 erwärmte Luft bis vor den Verdampfer 3 zurückgeführt und dadurch ein Vereisen des Verdampfers 3 verhindert wird.

Zur Steuerung der Klappe 15 dient eine Steuerung 16, welche eingangsseitig mit einem die Außentemperatur des Verdampfers 3 messenden Temperaturfühler 17 verbunden ist.

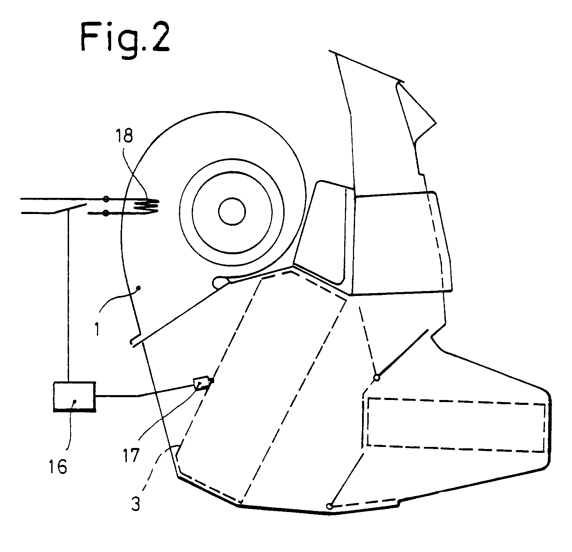

Die Ausführungsform nach Figur 2 unterscheidet sich von der zuvor beschriebenen dadurch, daß als Heizung ein elektrischer Heizdraht 18 im Luftkanal 2 vor dem Verdampfer 3 angeordnet ist. Dieser Heizdraht 18 erwärmt den dem Verdampfer 3 zugeführten Luftstrom, wenn der Temperaturfühler 17 der Steuerung 16 eine zu niedrige Temperatur des Verdampfers 3 meldet.

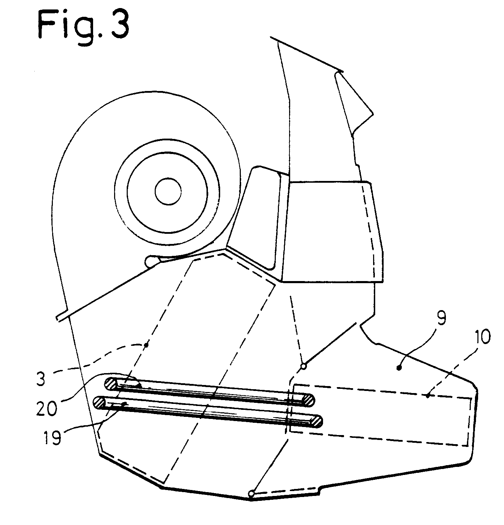

Gemäß Figur 3 führen Leitungen 19, 20, welche den Wärmetauscher 10 im Heizkanal 9 mit der Kühlflüssigkeit der Brennkraftmaschine verbinden, am Verdampfer 3 unmittelbar vorbei. Die ständig in diesen Leitungen 19, 20 zirkulierende, von der Brennkraftmaschine aufgeheizte Kühlflüssigkeit sorgt auf diese Weise dafür, daß der Verdampfer 3 sich nicht so weit abkühlen kann, daß Vereisungsgefahr besteht.

## Patentansprüche

1. Klimaanlage für ein Kraftfahrzeug mit einem Verdampfer (3), welcher in einem von der Außenluft durchströmten, in das Innere des Kraftfahrzeugs führenden Luftkanal (2) angeordnet ist und durch den mittels eines Kompressors (11) ein Kältemittel gefördert wird und welche eine einen Temperaturfühler (17) aufweisende Steuerung (16) zum Verhindern eines Vereisens des Verdampfers (3) bei niedrigen Außentemperaturen aufweist sowie mit einem separaten Wärmetauscher (10) zum Aufheizen der dem Fahrzeuginnenraum zuzuführenden Luft, dadurch gekennzeichnet, daß der Verdampfer (3) eine Heizung (13) zum Verhindern einer zu niedrigen, zu einer Vereisung führenden Verdampfertemperatur aufweist und die Steuerung (16) zum Einschalten der Heizung (13) bei zu niedrigen, eine Vereisungsgefahr herbeiführenden Temperaturen ausgebildet ist.

2. Klimaanlage nach Anspruch 1, dadurch gekennzeichnet, daß die Heizung (13) durch einen Warmluftrückführkanal (14) gebildet ist, welcher von der Auslaßseite eines zum Aufheizen der in das Kraftfahrzeug geleiteten Frischluft bestimmten Wärmetauschers (10) bis vor den Verdampfer (3) führt und ein von dem Temperaturfühler (17) gesteuertes Absperrorgan (Klappe 15) hat.

3. Klimaanlage nach Anspruch 1, dadurch gekennzeichnet, daß die Heizung durch einen elektrischen Heizdraht (18) im Luftkanal (2) strömungsmäßig vor dem Verdampfer (3) gebildet ist.

4. Klimaanlage nach Anspruch 1, dadurch gekennzeichnet, daß die Heizung durch entlang des Verdampfers (3) zum Wärmetauscher (10) der Fahrzeugheizung führende Leitungen (19, 20) gebildet ist.

5. Klimaanlage nach zumindest einem der vorangehenden Ansprüche, dadurch gekennzeichnet, daß der Temperaturfühler (17) zum Messen der Temperatur der Außenwand des Verdampfers (3) angeordnet ist.

## Claims

1. Air conditioning system for a motor vehicle with an evaporator (3) which is arranged in an air duct (2) through which the outside air flows and which leads into the interior of the motor vehicle and through which evaporator (3) a coolant is conveyed by means of a compressor (11) and comprises a control means (16) having a temperature sensor (17) to prevent icing of the evaporator (3) at low outside temperatures, as well as with a separate heat exchanger (10) for heating up the air to be supplied to the interior of the vehicle, characterised in that the evaporator (3) comprises a heating means (13) for preventing too low an evaporator temperature leading to icing, and the control means (16) is designed to switch on the heating means (13) at too low temperatures which produce a risk of icing.

2. Air conditioning system according to claim 1, characterised in that the heating means (13) is formed by a hot air return duct (14) which leads from the outlet side of a heat exchanger (10), which is designed to heat up the fresh air conducted into the motor vehicle, to a point in front of the evaporator (3) and has a shut-off member (flap 15) controlled by the temperature sensor (17).

3. Air conditioning system according to claim 1, characterised in that the heating means is formed by an electric heating wire (18) in the air duct (2) upstream of the evaporator (3).

4. Air conditioning system according to claim 1, characterised in that the heating means is formed by pipes (19, 20) leading along the evaporator (3) to the heat exchanger (10) of the vehicle heating system.

5. Method according to one or more of the preceding claims, characterised in that the temperature sensor (17) is arranged to measure the temperature of the outer wall of the evaporator (3).

## Revendications

1. Installation de climatisation pour un véhicule automobile, comprenant un évaporateur (3) qui est disposé dans un canal d'air (2) traversé par l'air ambiant et menant à l'intérieur du véhicule automobile et qui est traversé par un frigorigène sous l'action d'un compresseur (11), une commande (16) munie d'un détecteur de température (17) pour empêcher un givrage du vaporisateur (3) dans le cas de températures ambiantes basses, ainsi qu'un échangeur de chaleur (10) séparé pour chauffer l'air devant être amené dans l'habitacle du véhicule, **caractérisée** par le fait que le vaporisateur (3) présente un chauffage (13) pour empêcher le vaporisateur d'adopter une température trop basse, conduisant à un givrage, et que la commande (16) est réalisée pour mettre en marche le chauffage (13) à des températures trop basses provoquant un risque de givrage.

2. Installation de climatisation suivant la revendication 1, **caractérisée** par le fait que le chauffage (13) est formé par un canal de retour d'air chaud (14) qui mène du côté extérieur d'un échangeur de chaleur (10) destiné à chauffer l'air frais introduit dans le véhicule automobile, jusque devant le vaporisateur (3) et qui comporte un organe d'arrêt (volet 15) commandé par le détecteur de température (17).

3. Installation de climatisation suivant la revendication 1, **caractérisée** par le fait que le chauffage est constitué par un filament chauffant électrique (18) situé dans le canal d'air (2) en amont de l'évaporateur (3).

4. Installation de climatisation suivant la revendication 1, **caractérisée** par le fait que le chauffage est constitué par des conduites (19, 20) menant le long de l'évaporateur (3) vers l'échangeur de chaleur (10) du chauffage du véhicule.

5. Installation de climatisation suivant au moins l'une des revendications précédentes, **caractérisée** par le fait que le détecteur de température (17) est agencé pour mesurer la température de la paroi extérieure de l'évaporateur (3).
